# EUROPEAN PATENT APPLICATION

(11) **EP 3 163 910 A1**
(43) Date of publication of application: **03.05.2017**
(21) Application number: 15191885.1
(22) Date of filing: 28.10.2015
(51) Int. Cl.: H04R 25/00, G09B 21/00

(54) **A WIRELESS HEARING SYSTEM**

(71) Applicant: GN ReSound A/S, 2750 Ballerup (DK)
(72) Inventor: GUDIKSEN, Ole, 3520 Farum (DK)
(74) Representative: Guardian IP Consulting I/S

(57) **Abstract**

The present invention relates in a first aspect to a wireless hearing system comprising one or more hearing instruments, for one or more hearing instrument users, connectable to a portable display terminal via at least one wireless data communication channel. At least one, and preferably each, of the one or more hearing instruments comprises a control and processing circuit configured to recording operational status data of the hearing instrument and a first wireless communication circuit configured to transmit said operational status data through the at least one wireless data communication channel. The portable display terminal comprises a second wireless communication circuit configured to receive respective operational status data from the one or more hearing instruments through the at least one wireless data communication channel. A terminal processor of the portable display terminal is configured to displaying the received respective operational status data via a graphical user interface of an electronic display. The graphical user interface comprises a plurality of predetermined fields configured to display, for each hearing instrument user, an ID symbol indicating a user identity and one or more status symbols indicating the operational status data of a corresponding hearing instrument.

## Description

The present invention relates in a first aspect to a wireless hearing system comprising one or more hearing instruments, for one or more hearing instrument users, connectable to a portable display terminal via at least one wireless data communication channel. At least one, and preferably each, of the one or more hearing instruments comprises a control and processing circuit configured to recording operational status data of the hearing instrument and a first wireless communication circuit configured to transmit said operational status data through the at least one wireless data communication channel. The portable display terminal comprises a second wireless communication circuit configured to receive respective operational status data from the one or more hearing instruments through the at least one wireless data communication channel. A terminal processor of the portable display terminal is configured to displaying the received respective operational status data via a graphical user interface of an electronic display. The graphical user interface comprises a plurality of predetermined fields configured to display, for each hearing instrument user, an ID symbol indicating a user identity and one or more status symbols indicating the operational status data of a corresponding hearing instrument.

### BACKGROUND OF THE INVENTION

Various kinds of assistive hearing systems such auditory training systems are known in the art and proved to be helpful in learning and training situations for example involving a group of hearing impaired individuals. The assistive hearing system may for example transmit speech directly from a microphone worn by a teacher or other instructor to a group or class of hearing impaired children or infants wearing hearing instrument or aids. In that connection it is desirable to provide the teacher with a mechanism to monitor or survey the operation of the hearing instruments of the hearing impaired children or infants to ensure the instruments function as intended and the children therefore able to adequately hear and understand the teacher's instructions.

GB 2 107 502 A discloses an auditory training system which includes a teacher microphone and a wireless FM transmitter for transmitting speech via a radio signal to a plurality of portable body-worn radio receiving units worn by the hearing impaired users and coupled to their hearing instruments. Each of the portable body-worn radio receiving units comprises a LED indicator which indicates whether the body-worn unit receives the FM radio signal such that the instructor is visually aware that the hearing aid wearer receives instructions.

However, it is generally difficult for the instructor to oversee all hearing instruments users of a large user group that may include more than 10 or 20 hearing impaired individuals where many may be seated relatively remote from the instructor. Furthermore, it is difficult and undesirable to place LED diodes on the housing surfaces of many popular types of hearing aids because of a severely restricted housing surface of modern BTE, ITE, ITC, RIC etc. types of hearing instruments. Even in situations where it is possible to support a LED diode on the hearing instrument housing, the line of sight to the diode may easily be obscured by the hair or ear lobe of the hearing impaired individual.

Finally, the amount of information which conveniently can be conveyed about the operational status of the hearing instrument by a single or few LED diodes is severely restricted.

### SUMMARY OF THE INVENTION

A first aspect of the invention relates to a wireless hearing system comprising one or more hearing instruments for one or more hearing instrument users. The one or more hearing instruments are connectable to a portable display terminal of the wireless hearing system via a at least one wireless data communication channel. At least one, and preferably each, of the one or more hearing instruments may comprise:
one or more audio input channels for generating one or more audio input signals, a control and processing circuit configured to process a selected audio input signal and further to recording operational status data of the hearing instrument. A first wireless communication circuit of the hearing instrument is configured to transmit said operational status data through the at least one wireless data communication channel.

The portable display terminal comprises an electronic display and a second wireless communication circuit configured to receive respective operational status data from the one or more hearing instruments through the at least one wireless data communication channel. A terminal processor is configured to:
displaying the received respective operational status data via a graphical user interface of the electronic display,
said graphical user interface comprising a plurality of predetermined fields configured to display, for each hearing instrument user, an ID symbol indicating a user identity and one or more status symbols indicating the operational status data of a corresponding hearing instrument.

The skilled person will understand that the wireless hearing system may comprise only a single hearing instrument user with a single or two hearing instruments or aids or numerous hearing instrument users such as more than 10 or 20 users each wearing one or two hearing instruments. The hearing instrument users may comprise hearing impaired individuals for example hearing impaired infants, children, or adults and/or individuals suffering from dementia or semi-dementia.

The portable display terminal may comprise a smartphone, tablet, laptop etc. with a suitable wireless communication circuit and antenna. The at least one wireless data communication channel may be based on optical transmission or radio frequency transmission of the respective operational status data. For radio frequency transmission the at least one wireless data communication channel may comprise a plurality of spaced apart frequency bands, such as between 60 and 120 frequency bands. The plurality of spaced apart frequency bands may be located in the industrial scientific medical (ISM) radio frequency range or frequency band such as the 2.40-2.50 GHz band or the 902-928 MHz band. The plurality of spaced apart frequency bands may alternatively be located in another suitable frequency band. The wireless communication circuit may be compatible with a proprietary wireless data communication protocol or a standardized wireless data communication protocol. The standardized wireless data communication protocol may comprise a bi-directional data communication protocol such as Bluetooth LE as defined by the Bluetooth Core Specification 4.2 or 4.1, or future or earlier versions of the Bluetooth standard as adopted by the Bluetooth SIG. In some embodiments, the at least one wireless data communication channel may comprise one or more Bluetooth connections between the one or more hearing instruments and the portable display terminal. In other embodiments, the at least one wireless data communication channel may comprise a wireless data communication network such as a Wi-Fi network in accordance with one or more of the IEEE 802.11 (Wi-Fi) standards.

The graphical user interface of the portable display terminal may be user readable and therefore present a teacher, parent or another supervising individual, with an overview of a current operational status of the one or more hearing impaired user(s) and their respective hearing instrument(s) via the corresponding status symbol or symbols. The one or more hearing impaired user(s) may belong to a particular user group such as a school class or kindergarten class etc. The graphical user interface of the portable display may provide the teacher, parent or any other supervisor with a convenient and efficient overview of the current operational status of all of the hearing instruments of the wireless hearing system from a remote location. Consequently, the supervisor does not have to individually inspect LED status indicators mounted on each of the hearing instrument housings to ascertain the operational status of the hearing instrument. The electronic display of the portable display terminal is able to show the operational status information in an uncoded and therefore easily comprehensible manner by presenting suitable icons, letter and symbols on the graphical user interface. The electronic display may comprise a LCD, LED, OLED or TFT display preferably readable even in daylight. The size of the electronic display will generally vary depending on housing dimensions of the portable display terminal, but may for example lie between 4 and 12 inches for common dimensions of the portable display terminal.

Each of the one or more hearing instruments or aids of the wireless hearing system may comprise a BTE, RIE, ITE, ITC, CIC etc. type of hearing instrument. Where the wireless hearing system comprises numerous hearing instruments these may be different types hearing instruments for example a mix of BTE, RIC, CIC instruments. Naturally, all hearing instruments of the system may alternatively be identical types of hearing instruments. In some embodiments of the wireless hearing system, at least some of the hearing instruments may comprise a cochlea implant type of auditory prosthesis where the output signal to the hearing impaired user is electrical electrode signals rather than a traditional acoustic or sound output signal.

The hearing instruments may for example be powered by a conventional 1.2 V ZnO₂ battery cell or by a rechargeable battery cell. In the design of a hearing aid, the size and power consumption of electronic circuitry are important considerations. Consequently, the wireless data communication protocol utilized by the first wireless communication circuit may be designed with the objective of minimizing power consumption associated with repeated transmission of the operational status data. The operational status data from each hearing instrument may for example be transmitted as consecutive data packages over time and the first wireless communication circuit switched to a sleep or low-power mode in-between subsequent data transmission events.

Each of the hearing instruments or aids of the wireless hearing system may comprise an input transducer, such as one or several microphones, a telecoil or a direct audio input source configured to generate respective audio input signals. The control and processing circuit may be configured to switch between multiple audio input sources or channels to select a particular audio signal source for processing and transmission to an output transducer of the hearing instrument as discussed below. The control and processing circuit may comprise a hearing loss processor configured to compensate a hearing loss of the hearing instrument user and output a hearing loss compensated audio signal. The hearing loss compensated audio signal may be adapted to restore loudness of the audio input signal such that the loudness of the auditory output signal as perceived by the hearing instrument user matches the loudness perceived by a normal hearing listener without a hearing instrument. Each of the hearing instruments may additionally comprise an output transducer, such as a receiver, loudspeaker, implanted electrode transducer etc., configured to output the auditory output signal based on the hearing loss compensated audio signal. The auditory output signal is perceived by the hearing instrument user's auditory system as sound.

The control and processing circuit of the hearing instrument may comprise dedicated digital logic circuitry, a software programmable processor or any combination thereof. As used herein, the terms "processor", "signal processor", "controller", "system", etc., are intended to refer to microprocessor or CPU-related entities, either hardware, a combination of hardware and software, software, or software in execution. For example, a "processor", "signal processor", "controller", "system", etc., may be, but is not limited to being, a process running on a processor, a processor, an object, an executable file, a thread of execution, and/or a program. By way of illustration, the terms "processor", "signal processor", "controller", "system", etc., designate both an application running on a processor and a hardware processor. One or more "processors", "signal processors", "controllers", "systems" and the like, or any combination hereof, may reside within a process and/or thread of execution, and one or more "processors", "signal processors", "controllers", "systems", etc., or any combination hereof, may be localized on one hardware processor, possibly in combination with other hardware circuitry, and/or distributed between two or more hardware processors, possibly in combination with other hardware circuitry. Also, a processor (or similar terms) may be any component or any combination of components that is capable of performing signal processing. For examples, the signal processor may be an ASIC processor, a FPGA processor, a general purpose processor, a microprocessor, a circuit component, or an integrated circuit.

The operational status data of the one or more hearing instruments may comprise one or more data groups associated with:
- a current audio input channel selection,
- a current pre-set listening program selection,
- a current battery level of a hearing instrument battery,
- a current Received Signal Strength Indicator (RSSI) at the at least one hearing instrument of a wireless signal from an external direct audio source,
- a current connectivity status (pairing) between hearing instrument and the portable terminal,
- a current Received Signal Strength Indicator (RSSI) at the portable terminal of a wireless signal transmitted by the hearing instrument,
- a current volume control setting of the hearing instrument.

If the wireless hearing system comprises numerous hearing instruments, each hearing instrument may be configured to transmit a single group of operational status data or several groups of operational status data under the control of the control and processing circuit. The hearing instruments of the wireless hearing system may transmit different groups of operational status data, but preferably at least one group of operational status data is transmitted by all hearing instruments for example the current connectivity status (pairing) between the hearing instrument and the portable display terminal.

The graphical user interface of the portable terminal may be adapted to inform the supervisor of the wireless hearing system about the current status of the associated hearing instruments in a simple and efficient manner. This may be accomplished by associating each of the groups of operational status data with a unique symbol displayed on the plurality of predetermined fields of the graphical user interface. The unique symbol may comprise a unique set of alphanumeric characters, an icon or a graphical symbol as discussed in further detail below with reference to the appended drawings. Each of the predetermined fields of the graphical user interface of the portable display terminal may comprise two or more adjacently arranged unique symbols associated with respective groups of the operational status data as illustrated in further detail below with reference to the exemplary graphical user interfaces shown on the appended drawings.

Some embodiments of the graphical user interface provide the supervisor or teacher with a simple and efficient mechanism for grouping the hearing instruments users and their hearing instruments by dividing these into two or more separate user groups. A user group may be school class or kindergarten class etc. The graphical user interface comprises two or more adjacently arranged selectable group fields associated with the respective groups of hearing instrument users wherein each group of hearing instrument users comprises a plurality of user identities. The user identities of each group of hearing instrument users may be selectively presented on the graphical user interface in response to a selection of a particular user group. Hence, the graphical user interface may be configured to, by selection of a group field, display a first list in a group field comprising the plurality of ID symbols associated with user identities of the selected user group.

According to one embodiment of the graphical user interface of the portable display terminal, the supervisor or teacher may organize hearing instrument users of the system by manipulating relevant graphical symbols, icons or display fields associated with particular hearing instrument users and user groups directly on the electronic display depicting the graphical user interface. The graphical user interface may for example be configured to:
display a second list in a user field of the display, spaced apart from the group field of the display, comprising respective ID symbols associated with all registered user identities. The supervisor may add a hearing instrument user to a group of users by dragging and dropping the ID symbol associated with the hearing instrument user from the user field of the display to the group field of the display and/or deleting a hearing instrument user from a group of users by dragging and dropping the ID symbol associated with the hearing instrument user from the group field of the display to the user field of the display. The registered user identities may comprise hearing instrument users that are not currently connected to the portable display terminal, but have been connected and registered by the portable terminal during an earlier connection event or session.

The portable display terminal may be configured to function as a programmer or remote control of the one or more hearing instruments of the wireless hearing system according to some embodiments of the invention. The terminal processor of the portable display terminal may therefore further be configured to generate and transmit a data command to a hearing instrument by actuation or selection of the one or more status symbol(s) of the graphical user interface indicating the current operational status data of the corresponding hearing instrument. These embodiments require a bidirectional data exchange capability of the second wireless communication circuit of the portable display terminal enabling the latter to transmit data commands through the at least one wireless data communication channel in addition to the previously discussed ability to receive the respective operational status data from the one or more hearing instruments of the system. Likewise, the first wireless communication circuit of the hearing instrument is configured to receive the data commands through the at least one wireless data communication channel. The first wireless communication circuit may transmit a received data command to the control and processing circuits for validation, error-checking and execution or further evaluation. The skilled person will understand that the control and processing circuit of the hearing instrument may comprise a mechanism to determine whether a particular data command is addressed to the hearing instrument as discussed in further detail below with reference to the appended drawings.

The data command may be associated with a function of the hearing instrument selected from the group of:
- change a current audio input channel selection,
- change a current pre-set listening program selection,
- change a current connectivity status (pairing) between the at least one hearing instrument and the portable terminal,
- change a current volume control setting of the hearing instrument. Hence, the control and processing circuit may respond to receipt of a particular data command by changing the current audio input channel, changing the current pre-set listening program, connecting or disconnection the wireless communication channel, changing the current volume control setting etc. This embodiment allows the supervisor to remotely and conveniently change the functionality of the selected hearing instrument if the hearing instrument user has failed to do so for one reason or the other.

A second aspect of the invention relates to a portable display terminal wirelessly connectable to one or more hearing instruments of one or more hearing instrument users. The portable display terminal comprises an electronic display and a wireless communication circuit configured to receive respective operational status data from at least one, and preferably each, of the one or more hearing instruments through the at least one wireless data communication channel such as respective Bluetooth connections. The terminal processor is configured to receive and store the respective operational status data in a predetermined memory area of the portable display terminal such as a non-volatile memory area. The terminal processor is configured to displaying the received respective operational status data via a graphical user interface on the electronic display where said graphical user interface comprises one or more predetermined fields configured to display, for each of the one or more hearing instruments, an ID symbol indicating an identity of the hearing instrument user and one or more status symbols reflecting the operational status data of the user's hearing instrument. Hence, the one or more status symbols associated with at least one, and preferably each, of the one or more hearing instruments may be repeatedly updated to reflect current operational status of the hearing instrument as the latter transmits updated operational status data to the portable display terminal.

Various groups of operational status data of the one or more hearing instruments have already been discussed above and will not be repeated here. However, the one or more status symbols of each of the predetermined fields may comprise corresponding unique symbols such as a set of alphanumeric characters, an icon or a graphical symbol or any combination thereof.

The portable display terminal may be configured to function as a programmer or remote control of the one or more hearing instruments of the wireless hearing system as discussed above. Hence, the wireless communication circuit of the portable display terminal may comprise a data transceiver configured to transmit data through the at least one wireless data communication channel to the one or more hearing instruments; and the terminal processor is further configured to generate and transmit a data command to a hearing instrument by actuation or selection of the one or more status symbol(s) of the graphical user interface indicating the current operational status data of the corresponding hearing instrument. One embodiment of the portable display terminal may be configured to receive and transmit the supervisor's or teacher's voice to the one or more hearing instruments of the wireless system via the at least one wireless data communication channel. Hence, the portable display terminal may eliminate the need for a traditional FM microphone system. This embodiment of the portable display terminal comprises a microphone for receiving a speech signal generated by the supervisor, teacher or instructor holding or wearing the portable display terminal. The terminal processor being further configured to:
digitize, encode and transmit the speech signal to the one or more hearing instruments through the at least one wireless data communication channel.

A third aspect of the invention relates to a hearing instrument comprising one or more audio input channels for generating one or more audio input signals and a control and processing circuit configured to process a selected audio input signal and further to recording operational status data of the hearing instrument. The hearing instrument or hearing aid further comprises a wireless communication circuit configured to transmit said operational status data through the at least one wireless data communication channel to the portable display terminal according anyone of the above-described embodiments thereof.

### BRIEF DESCRIPTION OF THE DRAWINGS

In the following, several embodiments of the present invention are described in more detail with reference to the appended drawings, wherein:
FIG. 1 illustrates schematically a wireless hearing system comprising a plurality of hearing instruments, for hearing impaired users, and a common portable display terminal in accordance with a first embodiment of the invention,
FIG. 2 illustrates schematically a first exemplary layout of a graphical user interface on an electronic display of the common portable display terminal,
FIG. 3 illustrates schematically a second exemplary layout of the graphical user interface on the electronic display of the common portable display terminal; and
FIG. 4 illustrates schematically a third exemplary layout of the graphical user interface on the electronic display of the common portable display terminal

### DETAILED DESCRIPTION OF EMBODIMENTS

In the following various exemplary embodiments of the present wireless hearing system are described with reference to the appended drawings. The skilled person will understand that the accompanying drawings are schematic and simplified for clarity and therefore merely show details which are essential to the understanding of the invention, while other details have been left out. Like reference numerals refer to like elements throughout. Like elements will, thus, not necessarily be described in detail with respect to each figure.

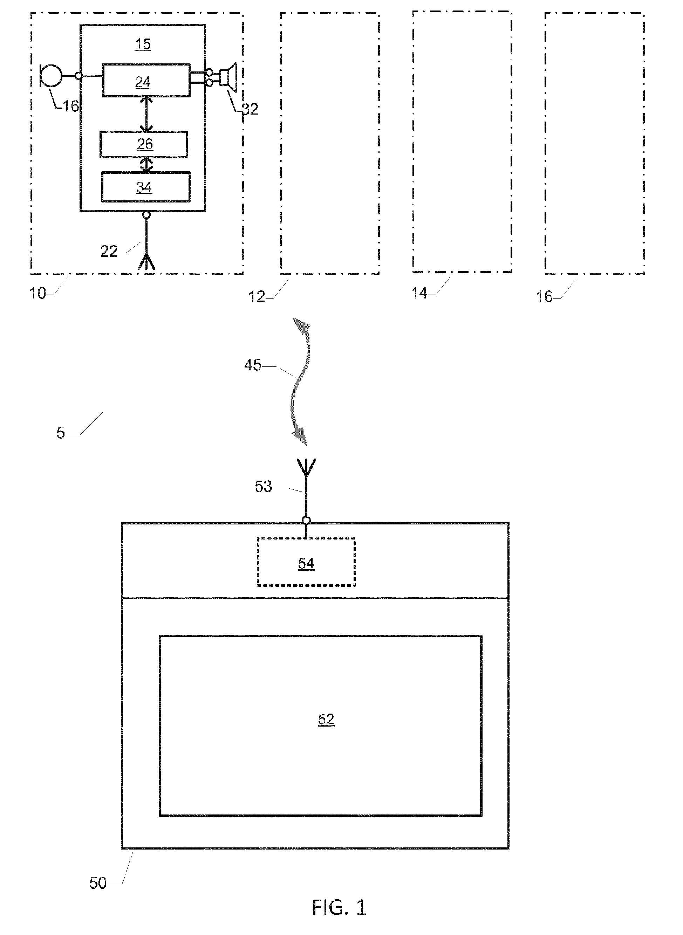

FIG. 1 schematically illustrates a wireless hearing system 5 comprising a plurality of hearing instruments 10, 12, 14, 16 worn by respective hearing instrument users (not shown). The skilled person will understand that the wireless hearing system 5 may comprise more or less than the illustrated four hearing instruments and users such as more than 10 or 20 hearing instrument users each wearing one or two hearing instruments. The hearing instrument users may be hearing impaired individuals or essentially normal hearing individuals suffering from dementia. The wireless hearing system 5 further comprises a common portable, or possibly stationary, display terminal 50 that is connected or connectable to each of the plurality of hearing instruments 10, 12, 14, 16 via one or more wireless data communication channel(s) 45. The common portable display terminal 50 may comprise a smartphone, tablet, laptop etc. with a suitable wireless communication circuit 54 and antenna 53. The wireless communication circuit 54 may be compatible with a proprietary wireless data communication protocol or a standardized wireless data communication protocol. The standardized wireless data communication protocol may be Bluetooth LE as defined by the Bluetooth Core Specification v4.1 or v4.2.

The hearing instrument 10 comprises a wireless communication circuit or unit 34 for connection to the common portable display terminal 50 through the wireless data communication channel 45 in accordance with a selected communication protocol such as Bluetooth LE. The wireless communication unit 34 may be coupled to or integrated with a communication controller 26 performing various types of communication protocol related tasks associated with handling the wireless data communication channel 45. A unique ID may be associated with each of the plurality of hearing instruments 10, 12, 14, 16 and transmitted to the common portable display terminal 50 allowing the latter to identify each operative hearing instrument within range of the wireless data communication channel 45. The hearing instrument 10 typically comprises one or more audio input channels for generating one or more audio input signals selectively applied to a control and processing circuit 24. A microphone 16 is connected to a microphone input channel of the hearing instrument 10 as schematically indicated. The microphone 16 outputs an analogue or digital audio input signal corresponding to sound arriving at the microphone when the hearing instrument or aid 10 is operating. If the microphone 16 outputs an analogue audio signal the hearing aid circuit 15 may comprise an analogue-to-digital converter (not shown) which converts the analogue audio signal into a corresponding digital audio signal for digital signal processing in the hearing aid circuit 15. The hearing instrument 10 may comprise a number of additional audio input channels (not shown) for example a direct audio input coupled to a wireless communication circuit 34 for receipt of wireless audio signals, and a telecoil input channel for receipt of induction loop generated magnetic signals. The direct audio input may receive a wireless television (TV) signal either received via the wireless communication circuit 34 or via another wireless audio input source for example a FM receiver or an magnetic induction receiver or an optical receiver. The hearing instrument or aid 10 may comprise a ZnO₂ battery cell (not shown) that is connected for supplying power to the hearing aid circuit 15.

The control and processing circuit 24 is configured to receive and process/amplify a selected audio input signal according to a hearing loss of the hearing impaired user. Preferably, the control and processing circuit 24 may for example include a hearing loss processor, for example a programmable microprocessor like a Digital Signal Processor, configured or programmed to provide dynamic range compression of the selected audio input signal as is well-known in the art for compensation of frequency dependent loss of dynamic range of the hearing impaired user. Accordingly, the control and processing circuit 24 outputs a hearing loss compensated audio signal to an output transducer 32 of the hearing instrument 10. This output transducer may comprise a miniature loudspeaker or receiver for generating an acoustic output signal for traditional ITE, BTE, RIC, CIC etc. types of hearing instruments or an implantable electrode for a cochlear implant type of hearing instrument. The programmable microprocessor may comprise a software programmable microprocessor such as that the operation and functions of the hearing aid 10 may be controlled by a suitable operating system executed on the software programmable microprocessor. The operating system may be configured to manage hearing aid hardware and software resources, e.g. including the hearing loss processor and possibly other processors and associated signal processing algorithms, the wireless communication unit 34, certain memory resources etc. The operating system may schedule tasks for efficient use of the hearing aid resources and may further include accounting software for cost allocation, including power consumption, processor time, memory locations, wireless transmissions, and other resources. The operating system may control, in cooperation with the communication controller 26 and the wireless communication unit 34, wireless transmission of the acquired operational status data in accordance with the protocol of the wireless data communication channel 45.

The control and processing circuit 24 is configured to repeatedly monitor and record various operational status data of the hearing instrument 10 during operation for example when mounted at, or on, the ear of a hearing impaired user. The monitoring and recordation of the various operational status data of the hearing instrument 10 may for example be controlled by the previously discussed operating system executed on the software programmable microprocessor of the control and processing circuit 24. The operational status data may be acquired by interfacing to and reading data from selected hardware resources of the control and processing circuit 24 for example data registers. The operational status data may relate to different functions of the hearing instruments that are important to monitor for ensuring the integrity and functionality of the hearing instrument. One group of operational status data may include a current battery level of the hearing instrument battery for example expressed as a current DC voltage level or a current residual power. The operational status data may for example be grouped into a number of different status groups depending on the type of function the specific data relate to. A number of useful functions for which operational status data may be monitored and/or collected are functions such as:
- a current audio input channel selection,
- a current pre-set listening program selection,
- a current battery level of a hearing instrument battery,
- a current Received Signal Strength Indicator (RSSI) at the hearing instrument of a wireless signal from an external direct audio source,
- a current connectivity status (pairing) between hearing instrument and the portable terminal,
- a current Received Signal Strength Indicator (RSSI) at the portable terminal of a wireless signal transmitted by the hearing instrument,
- a current volume control setting of the hearing instrument.

The wireless communication circuit 34 may be configured to repeatedly transmit the recorded operational status data, at regular or irregular time intervals, to the common portable display terminal 50 through the wireless data communication channel 45. Certain types of operational status data may be transmitted essentially instantaneously after acquisition or recordation to reflect essentially real-time status of the function or functions in question. Other types of operational status data may be transmitted with a certain time delay, for example between 0.5 s and 10 s, after acquisition or recordation for example because these operational data are transmitted solely in predefined time slots. Hence, the actual time delay will depend on the time between subsequent data transmission time slots. The recordation of the operational status data may include a temporary storage of the collected data in a suitable memory area of the hearing instrument 10 for example located in a RAM buffer, data registers, EEPROM or flash memory. The memory area may be integrated with the control and processing circuit 24 on a common semiconductor die or otherwise readable by the control and processing circuit 24 for example via a wired communication data communication interface. In connection with the transmission of the operational status data, the control and processing circuit 24 may access or read the relevant status data from the relevant memory area or address.

The common portable display terminal 50 comprises a housing supporting a user readable electronic display 52 such as a LCD, LED, OLED or TFT display. The dimensions of the electronic display 52 will vary depending on a type and size of the housing of the portable terminal 50. The portable display terminal 50 further comprises a terminal processor (not shown) which may comprise an off-the shelf software programmable microprocessor for example an ARM series processor or core. The terminal processor may comprise various types of digital logic circuitry for performing various data input/output and control operations of the portable terminal. The terminal processor may likewise include a DSP core or functions to perform various advanced digital signal processing of radio frequency signals and audio signals. The terminal processor may likewise comprise or be coupled to dedicated display control hardware, e.g. a graphics controller, to control the features and layout of a graphical user interface displayed on the electronic display 52. The graphical user interface shows the received operational status data of each of the hearing instrument or instruments 10, 12, 14, 16 in an organized and structured manner as discussed in further detail below with reference to the additional drawings. Hence, the graphical user interface allows a teacher, parent or any other supervising individual in possession of the portable display terminal 50 to oversee or monitor the functionality of all connected hearing instruments. In some embodiments of the present wireless hearing system, the portable display terminal 50 may comprise programming buttons and programming functionality to allow programming of a selected hearing instrument of the plurality of connected hearing instruments via the graphical user interface as discussed in further detail below.

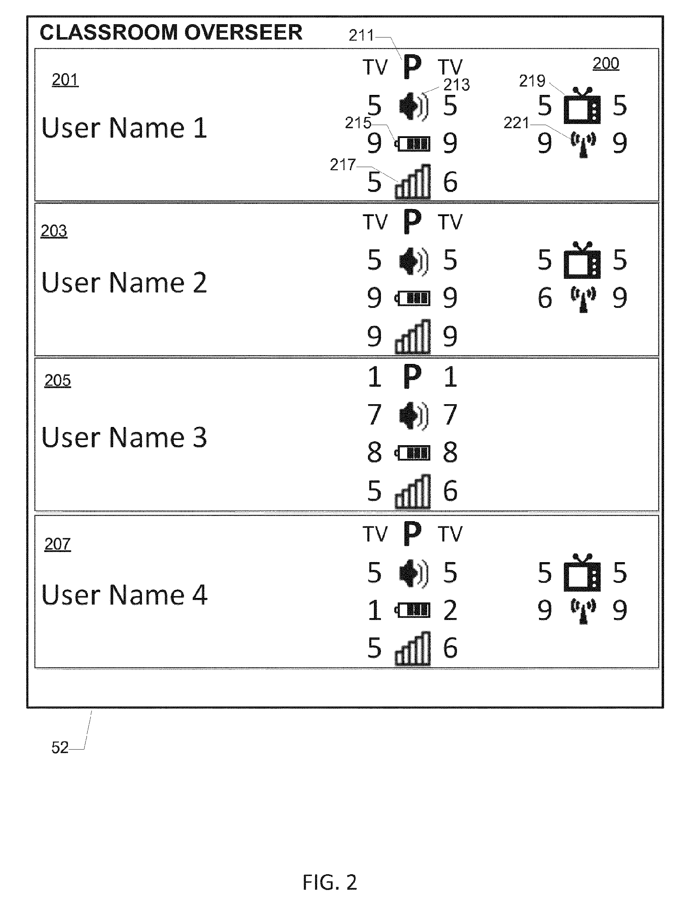

FIG. 2 illustrates schematically a first exemplary layout of the previously discussed graphical user interface 200 on the electronic display 52 of the common portable display terminal 50. The graphical user interface comprise a plurality of predetermined horizontally arranged rectangular boxes or fields, e.g. four fields or boxes 201, 203, 205, 205 which show respective unique ID symbols "User Name 1", "User Name 2", "User Name 3" and "User Name 4" indicating the identity of each of the hearing impaired users wearing respective ones of the hearing instruments 10, 12, 14 and 16. The uppermost rectangular box 201 additionally comprises six unique symbols 211, 213, 215, 217, 219, 221 for example a set of alphanumeric characters and/or icons, associated with a particular type or group of the received operational status data.

The topmost arranged "P" letter 211 is associated with a first group or type of the received operational status data indicating the user's ("User Name 1 ") current selection of pre-set listening program. The pre-set listening program is shown to be TV in this example. The below arranged loudspeaker icon 213 shows a second group of the received operational status data associated with a volume control setting regulation the gain of the microphone signal delivered at the microphone input of the hearing instrument. The current volume or gain setting of the hearing instrument is "5" as indicated after the loudspeaker icon. The current gain setting of the hearing instrument may for example be depicted on a predefined relative scale running from a minimum number to a maximum number e.g. 0 to 5 or between 1 and 10 etc.

The third unique icon or symbol is battery symbol 215, which is arranged below the loudspeaker symbol 213, shows a third group of the received operational status data indicating a current battery level or power level of the previously discussed battery cell of the hearing instrument. The battery level is indicated with a value of "9" and the skilled person will appreciate that the battery level will gradually decrease during use of the hearing instrument which will be reflected in the displayed battery level value because the control and processing circuit 24 of the hearing instrument repeatedly collects and transmits updated operational status data to the portable display terminal. The fourth icon or symbol 217 of the uppermost user box 201 associated with "User Name 1" is a signal strength icon. The signal strength icon belongs to a fourth group of the received operational status data indicating a current strength or power level of the RF or radio signal from the hearing instrument of "User Name 1" as received at the portable display terminal 52 through the at least one wireless data communication channel. This icon may comprise a Received Signal Strength Indicator (RSSI) which shows the received RF signal strength in relative terms between a maximum and minimum value. In the present embodiment the RSSI is indicated by a number of bars of the signal strength icon for example between 0 and 5 bars. Other embodiments may indicate the current signal strength of the RF or radio signal at the portable display terminal 52 in absolute terms for example dBm etc.

The fifth icon or symbol 219 of the uppermost user box 201 associated with "User Name 1" is a television icon which indicates the volume control setting of the pre-set TV listening program discussed above. The current volume control setting of the pre-set TV listening program is "5" as indicated after the television icon. The volume control setting of the hearing instrument may for example be depicted on a predefined relative scale running from a minimum value or number to a maximum value or number, e.g. 0 to 5. The sixth icon or symbol 221 of the uppermost user box 201 associated with "User Name 1" is a radio antenna icon which shows a current Received Signal Strength Indicator (RSSI) at the hearing instrument from an external TV signal transmission source or any other external direct audio source. The TV external signal may be produced by a FM radio transmitter of a FM system coupled to the hearing instrument or instruments of "User Name 1 ". The current radio signal strength of the external TV signal is "9" as indicated after the radio antenna icon. The RSSI at the hearing instrument may for example be depicted on a predefined relative numerical scale running from a minimum number to a maximum number e.g. 0 to 9.

The rectangular box 203, situated below the uppermost rectangular box 201, shows the received operational status data from the hearing instrument of the hearing impaired user "User Name 2". This rectangular box 203 comprises the same six unique symbols 211, 213, 215, 217, 219, 221 as discussed above showing the current operational status data for each of the six data groups of the hearing instrument of "User Name 2". The same applies for the following rectangular boxes 205, 207 in respect of "User Name" and "User Name 4, respectively. The skilled person will appreciate that the graphical user interface 200 of the electronic display 52 may be configured to display the operational status data of less than or more than 4 different hearing impaired users at a time depending for example on the dimensions of the display 52 and the number of separate symbols associated with each hearing impaired user. In some embodiments of the present wireless hearing system, the graphical user interface may be adapted to show the operational status data of more than 10, 20 or 30 hearing impaired users by scrolling through a list showing a smaller number of users, e.g. 4 different users, at a time. Likewise, the number of separate unique symbols 211, 213, 215, 217, 219, 221 associated with each of the hearing impaired users may be less than six or more than six depending on the specific requirement of a particular application of the graphical user interface.

The portable display terminal may be configured to function as a programmer or remote control of the hearing instruments 10, 12, 14 and 16 according to some embodiments of the wireless hearing system. These embodiments require a bidirectional data exchange capability of the wireless communication circuit of the portable display terminal enabling the terminal to transmit the data commands through the wireless data communication channel in addition to the previously discussed ability to receive the respective operational status data from the hearing instruments of the system. Likewise, the respective wireless communication circuits of the hearing instruments 10, 12, 14 and 16 are configured to receive the data commands through the at least one wireless data communication channel and convey these data to their respective control and processing circuits in addition to the previously discussed capability to transmit their respective operational status data. The skilled person will understand that the control and processing circuit of the hearing instrument may comprise a command interpreter, e.g. a program routine, which interprets or decodes the received data command and executes the corresponding function for example by writing a value to particular I/O port or by writing a predetermined value or state to a particular internal register or memory cell of the control and processing circuit. The skilled person will understand that the control and processing circuit of the hearing instrument may comprise a mechanism to determine whether a particular data command is valid and/or addressed to the hearing instrument. The data command may for example comprise a header field bearing a unique device address of the particular hearing instrument for which the data command is intended. The terminal processor of the portable display terminal may be configured to generate and transmit the desired data command to the addressed or designated hearing instrument by actuation or selection of one of the status symbol(s) 211, 213, 215, 217, 219, 221 of the graphical user interface 200 indicating the current operational status data of the corresponding hearing instrument such as the hearing instrument of "User Name 1". The transmitted data command may lead to a change of the functionality of the hearing instrument associated with the selected status symbol. The teacher may for example actuate the "P" symbol 211 and change the setting of the pre-set listening program of the corresponding hearing instrument from a current "TV" to "a microphone" setting. Hence, allowing the teacher to change the operational status of the selected hearing instrument and achieve a desired functionality by remote control if the hearing impaired user has failed to do so for one reason or the other.

The skilled person will understand that the graphical user interface may provide remote control of numerous types of functions of the selected hearing instrument such as:
- change a current audio input channel selection,
- change a current pre-set listening program selection,
- change a current connectivity status (pairing) between the hearing instrument and the portable terminal,
- change a current volume control setting of the hearing instrument.

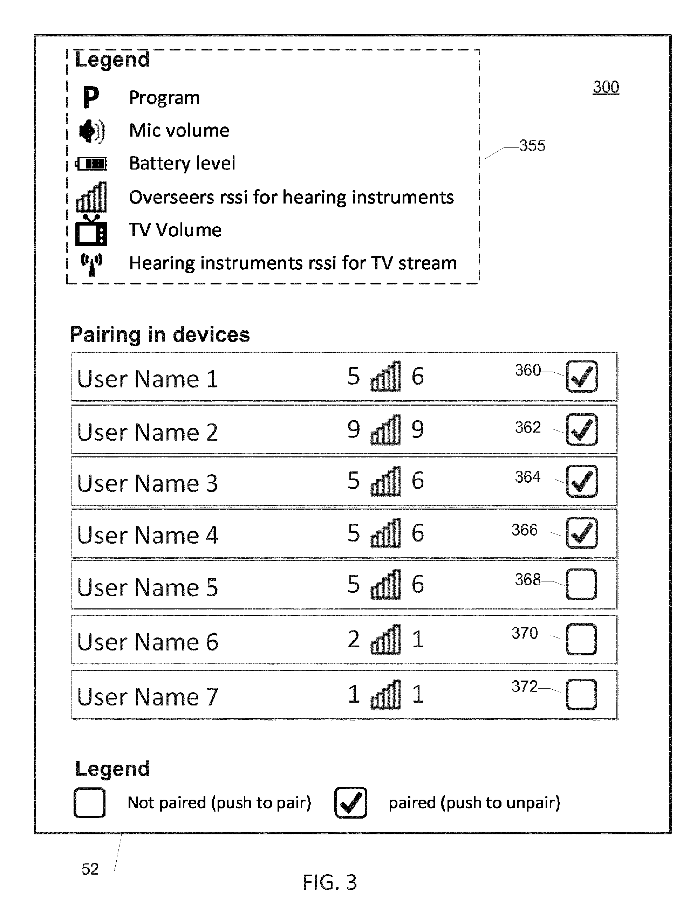

FIG. 3 illustrates schematically a second exemplary layout of the graphical user interface 300 on the electronic display 52 of the common portable display terminal. The purpose of the present the graphical user interface is to present the teacher, or another supervising individual, with an overview of the wireless connectivity status of all of the hearing instruments of the wireless hearing system and selectively toggle the wireless connection between on and off for each of the hearing instruments. This wireless connectivity status may for example be implemented by utilizing the device pairing mechanism of the previously discussed Bluetooth LE protocol. By actuating the square status boxes 360, 362, 364, 366, 368, 370, 372 the wireless connectivity status between the corresponding hearing instrument and the portable display terminal 50 may be toggled from connected to disconnected or vice versa. This feature allows the teacher to rapidly determine which of the hearing impaired user(s) that are connected and change the connectivity status as necessary.

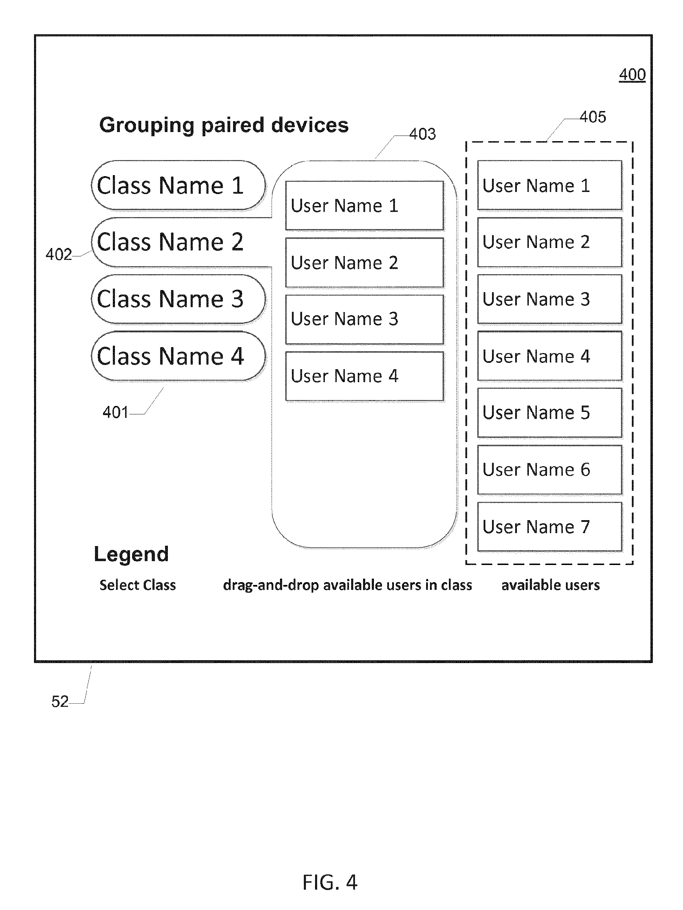

FIG. 4 illustrates schematically a third exemplary layout of the graphical user interface 400 on the electronic display 52 of the common portable display terminal. One purpose of the present the graphical user interface 400 is to present the teacher, or another supervising individual, with an overview of all hearing impaired users and their hearing instrument(s) available in the wireless hearing system. The present graphical user interface furthermore provides the teacher with a simple and efficient mechanism for grouping the wirelessly connected the hearing instruments, and their respective hearing impaired users, into two or more separate user groups to simply the monitoring of the users. The user groups may be school classes or kindergarten classes etc. The graphical user interface 400 comprises a first column 401 that lists the available user groups such as "Class Name 1 ", "Class Name 2" etc. A second column 403 lists the individual hearing impaired users of a particular user group by listing the users' previously discussed unique IDs such as "User Name 1", etc. The graphical user interface 400 furthermore comprises a third column 405 which lists all the available hearing impaired users for example organized in alphabetic order.

The teacher may organize the available hearing impaired users by manipulating the relevant graphical boxes, icons or fields associated with particular users and user groups directly on the user readable electronic display holding the graphical user interface 400. The teacher may for example select a particular user group such as "Class Name 2" by marking or tapping user group box 402 by a suitable pointing device for example a mouse or by finger touch if the screen of the display 52 is touch sensitive. When the desired user group such as "Class Name 2" is selected, the graphical user interface in response automatically displays the current members of the user group "Class Name 2" in the second column 403 as illustrated on the drawing. The teacher may for example add a new member/hearing impaired user to the group "Class Name 2" by dragging and dropping the ID symbol associated with the new hearing impaired user, e.g. "User name 5" from the third column 405 to the second column 403. An existing member of the user group "Class Name 2" may be deleted from this user group in a corresponding manner by dragging the ID symbol associated with the existing hearing impaired user from the second column 403 and dropping the ID symbol in the third column 405.

## Claims

1. A wireless hearing system comprising one or more hearing instruments for one or more hearing instrument users connectable to a portable display terminal via at least one wireless data communication channel;
wherein at least one of the one or more hearing instruments comprises:
one or more audio input channels for generating one or more audio input signals, a control and processing circuit configured to process a selected audio input signal and further to recording operational status data of the hearing instrument,
a first wireless communication circuit configured to transmit said operational status data through the at least one wireless data communication channel;
the portable display terminal comprising:
an electronic display,
a second wireless communication circuit configured to receive respective operational status data from the one or more hearing instruments through the at least one wireless data communication channel,
a terminal processor configured to:
displaying the received respective operational status data via a graphical user interface of the electronic display,
said graphical user interface comprising a plurality of predetermined fields configured to display, for each hearing instrument user, an ID symbol indicating a user identity and one or more status symbols indicating the operational status data of a corresponding hearing instrument.

2. A wireless hearing system according to any of the preceding claims, wherein the operational status data of the one or more hearing instruments comprises one or more data groups associated with:
- a current audio input channel selection,
- a current pre-set listening program selection,
- a current battery level of a hearing instrument battery,
- a current Received Signal Strength Indicator (RSSI) at the hearing instrument of a wireless signal from an external direct audio source,
- a current connectivity status (pairing) between hearing instrument and the portable terminal,
- a current Received Signal Strength Indicator (RSSI) at the portable terminal of a wireless signal transmitted by the hearing instrument,
- a current volume control setting of the hearing instrument.

3. A wireless hearing system according to claim 2, wherein each data group is associated with a unique symbol, such as a unique set of alphanumeric characters, an icon or a graphical symbol, displayed on the plurality of predetermined fields of the graphical user interface.

4. A wireless hearing system according to claim 3, wherein each of the predetermined fields of the graphical user interface comprises two or more adjacently arranged unique symbols associated with respective data groups.

5. A wireless hearing system according to any of the preceding claims, wherein the graphical user interface comprises:
two or more adjacently arranged selectable group fields associated with respective groups of hearing instrument users, such as school classes, wherein each group of hearing instrument users comprises a plurality of user identities.

6. A wireless hearing system according to claim 5, wherein the graphical user interface is configured to, by selection of a group field, display a first list in a group field comprising the plurality of ID symbols associated with user identities of the selected user group.

7. A wireless hearing system according to claim 6, wherein the graphical user interface is further configured to:
display a second list in a user field of the display, spaced apart from the group field of the display, comprising respective ID symbols associated with all registered user identities;
adding a hearing instrument user to a group of users by dragging and dropping the ID symbol associated with the hearing instrument user from the user field of the display to the group field of the display and/or
deleting a hearing instrument user from a group of users by dragging and
dropping the ID symbol associated with the hearing instrument user from the group field of the display to the user field of the display.

8. A wireless hearing system according to any of the preceding claims, wherein the terminal processor of the portable display terminal is further configured to generate and transmit a data command to a hearing instrument by actuation or selection of the one or more status symbol(s) of the graphical user interface indicating the current operational status data of the corresponding hearing instrument,.

9. A wireless hearing system according to claim 8, wherein the data command is associated with a function of the hearing instrument selected from a group of:
- change a current audio input channel selection,
- change a current pre-set listening program selection,
- change a current connectivity status (pairing) between the hearing instrument and the portable terminal,
- change a current volume control setting of the hearing instrument.

10. A portable display terminal wirelessly connectable to one or more hearing instruments of one or more hearing instrument users, comprising:
an electronic display,
a wireless communication circuit configured to receive respective operational status data from the one or more hearing instruments through at least one wireless data communication channel,
a terminal processor configured to receive and store the respective operational status data in a predetermined memory area of the portable display terminal,
wherein the terminal processor is configured to:
displaying the received respective operational status data via a graphical user interface on the electronic display;
said graphical user interface comprising one or more predetermined fields configured to display, for at least one of the one or more hearing instruments, an ID symbol indicating an identity of the hearing instrument user and one or more status symbols reflecting the operational status data of the hearing instrument.

11. A portable display terminal according to claim 10, wherein the operational status data of the at least one hearing instrument comprises one or more data groups associated with:
- a current audio input channel selection,
- a current pre-set listening program selection,
- a current battery level of a hearing instrument battery,
- a current Received Signal Strength Indicator (RSSI) at the at least one hearing instrument of a wireless signal from an external direct audio source,
- a current connectivity status between hearing instrument and the portable terminal,
- a current Received Signal Strength Indicator (RSSI) at the portable terminal of a wireless signal transmitted by the hearing instrument,
- a current volume control setting of the hearing instrument; and
wherein the one or more status symbols of each of the predetermined fields comprises corresponding unique symbols such as a set of alphanumeric characters, an icon or a graphical symbol.

12. A portable display terminal according to claim 10 or 11, wherein the wireless communication circuit comprises a data transceiver configured to transmit data through the wireless data communication channel to the one or more hearing instruments;
wherein the terminal processor is further configured to:
generate and transmit a data command to a hearing instrument by actuation or selection of the one or more status symbol(s) of the graphical user interface indicating the current operational status data of the corresponding hearing instrument.

13. A portable display terminal according to claim 12, further comprising a microphone for receiving a speech signal generated by an instructor holding or wearing the portable display terminal;
the terminal processor being further configured to:
digitize, encode and transmit the speech signal to the one or more hearing instruments through the at least one wireless data communication channel.

14. A hearing instrument comprising:
one or more audio input channels for generating one or more audio input signals,
a control and processing circuit configured to process a selected audio input signal and further to recording operational status data of the hearing instrument,
a wireless communication circuit configured to transmit said operational status data through the at least one wireless data communication channel to a portable display terminal according to anyone of claims 10 - 13.
